# EUROPEAN PATENT SPECIFICATION

(11) **EP 0 758 283 B1**
(45) Date of publication and mention of the grant of the patent: **28.01.1998**
(21) Application number: 95918338.5
(22) Date of filing: 01.05.1995
(51) Int. Cl.: B23K 26/00, F02K 9/64

(54) **FABRICATION OF TUBULAR WALL THRUST CHAMBERS FOR ROCKET ENGINES USING LASER POWDER INJECTION**
HERSTELLUNG VON ROHRWAND-RAKETENBRENNKAMMERN MIT HILFE VON LASER-AUFTRAGSCHWEISSEN
FABRICATION DE CHAMBRES DE POUSSEE A PAROIS TUBULAIRES POUR MOTEURS DE FUSEE, PAR INJECTION DE POUDRE LASER

(30) Priority: 29.04.1994 US 235586
(43) Date of publication of application: 19.02.1997
(73) Proprietor: UNITED TECHNOLOGIES CORPORATION, Hartford, CT 06101 (US)
(72) Inventor: DALZELL, William, J., Jr., Jupiter, FL 33458 (US); JAHNSEN, Eric, Jupiter, FL 33458 (US)
(74) Representative: Leckey, David Herbert
(86) International application number: US9505362
(87) International publication number: WO9529785

(56) References cited:
- EP-A- 0 558 870
- DE-A- 3 935 009
- US-A- 2 844 939
- US-A- 5 208 431
- WELDING JOURNAL INCLUDING: WELDING RESEARCH, vol. 70, no. 8, 1 August 1991 pages 37-40, XP 000212726 IRVING B 'HIGH-POWERED LASERS GAIN GROUND FOR CLADDING AND HARDFACING'

## Description

This invention relates to rocket engines, and particularly to the fabrication of tubular structures suitable for use as regeneratively cooled rocket engine thrust chambers.

Rocket engines commonly comprise thrust chambers which are subjected to extremely high temperatures as a result of the combustion and acceleration of propellants. As a result, the walls of the thrust chambers, combustion chambers, and nozzle assemblies are frequently subjected to cooling, by flow of a coolant through tubes or channels forming the inner wall of the thrust chamber. In effect, one may consider the thrust chamber to be a high pressure heat exchange unit within which the propellants are burned, surrounded by a structural jacket. As there is a continuing need for rockets of larger weight bearing capacity, new ways are sought to more economically provide such thrust chambers while improving the thrust and heat resistance thereof, and preventing leakage of highly pressurized gasses from the interior of the thrust chamber to the exterior.

A typical example of such a thrust chamber is shown in US Patent 3,208,132, of Escher, which discloses a rocket chamber produced by forming pre-shaped coolant flow passages within two sheets, and subsequently welding or brazing the formed sheets together to form individual flow passages. However, the integrity of welds thus formed is difficult to inspect and verify.

In US Patent 3,190,070, Neu teaches formation of a rocket chamber from a plurality of pre-formed coolant conduits of trapezoidal cross section in side-by-side relationship, said conduits being reduced in cross section at the exit nozzle throat to increase coolant flow velocity.

Further, Stockel et al, in US Patent 3,595,025, teach a rocket chamber inner wall having grooves therein, which form cooling channels when the inner wall is mated with an outer wall which is galvanized thereto. Such grooves require extensive, and costly, machining and labor.

Additional patents which relate to the potion of rocket engines include US Patent 3,127,667 of Tumavicus, which teaches a double thickness wall construction; US Patent 3,690,103, of Dederra et al, which relates to joining tubular elements, filling the joints therebetween, and electroforming a rigid outer layer over the exterior of the tubular elements; US Patent 3,501,916, of Butter et al, which relates to the form of the tubular elements suitable for use in rocket engine combustion chambers; and US Patent 3,349,464, of Becker et al, which teaches additional configurations of elongated hollow tubes which may be used and methods for the formation thereof. Further, US Patent 2,844,939 (over which claim 1 is characterised), of Schultz, teaches a tube bundle combustion chamber having a flexible substantially non-porous surrounding envelope of neoprene; US Patent 3,224,678, of Rosman, teaches a modular thrust chamber wherein individual tube bundles are connected to each other; US Patent 3,714,695, of Beeson, teaches welding together a blanket of tubes and then forming the blanket to any required contour, as opposed to contouring the individual tubes prior to welding them together; and, also, US Patent 3,897,316 of Huang, which relates to a composite channelled wall construction.

However, the methods proposed heretofore for the construction of tubular wall combustion chambers have suffered from a number of problems well known to those skilled in the art, such as in attainable cooling capacity, passage size limitations, material selection, and fabrication capability. Accordingly, there is needed a method for the preparation of rocket thrust chambers wherein the cooling passages are easily and economically manufactured, and securely bonded to each other and to the associated structural jacket. It is therefore an object of the present invention to provide a method for bonding together the tubes of a heat exchange unit of a rocket thrust chamber in an economic, rapid, and secure manner, with improved resistance to leakage of propellant combustion product, and minimal metallurgical effect upon the tubes themselves. It is also further desired to provide a tubular thrust chamber construction having an integrally formed outer structural surface.

The present invention is directed to a process for forming a rocket thrust chamber which provides for secure and metallurgically sound bonds between adjacent coolant tubes. According to a preferred embodiment of the present invention, a plurality of pre-formed heat exchange tubes are placed side by side in a jig, said jig having a correspondingly predetermined shape, such as a "Mae West" form, thus forming a tube bundle of the desired configuration. These tubes are joined to each other by laser powder injection welding, so as to close the gaps between the adjacent tubes and securely bond the tubes together. A structural jacket may then affixed to the tube bundle. This may be done in-situ, by continuing to laser powder injection coat the surface, using an appropriate jacket composition, or by welding a previously formed jacket in place. Laser powder injection may also be performed in the fabricating process to provide a repair method for the tube bundle, should the bundle be damaged or exhibit imperfect joining following the fabricating process.

Thus, the present invention comprises a method for fabricating a rocket thrust chamber having a combustion chamber, a throat section, and a nozzle section, said method comprising the steps of: forming a plurality of elongated hollow tubes having a configuration conforming to the shape of a rocket thrust chamber; forming an elongated hollow member by circumferentially placing said hollow tubes in parallel side-by-side relationship and in equally spaced encircling relationship to a common longitudinal axis; applying a filler material to the areas between said tubes in side-by-side relationship so as to completely fill the areas between said tubes and to bond said tubes to each other; wherein said filler material is applied by laser injection welding. Certain preferred embodiments will now be described by way of example only and with reference to the accompanying drawings, in which :
Figure 1 illustrates a schematic of a tubular thrust chamber made in accordance with the present invention;
Figure 2 represents an end elevation view of the thrust chamber shown in Figure 1;
Figure 3 is a vertical cross section of the thrust chamber wall taken at line 3 - 3 of Figure 1;
Figure 4 illustrates a schematic of a conventional laser powder injection focusing arrangement;
Figure 5 illustrates a schematic of the laser powder injection focusing arrangement of the present invention; and
Figure 6 illustrates a schematic of a laser powder injection coating apparatus suitable for use in the present invention.

As previously indicated, this invention relates to the construction of the side, or containment, walls of the combustion chamber, throat, and exhaust nozzle (hereinafter collectively referred to as the thrust chamber) of a rocket engine. The wall construction set forth provides a wall of great strength for a minimum of material, thus making the rocket highly efficient from the standpoint of the weight to power ratio. The present invention makes it possible to achieve a considerably higher thrust output for a given weight of thrust chamber than has previously been possible with more conventionally constructed rocket engines, such as those having solid walls, or those having double walls of relatively thin material formed by placement of a structural jacket about, and concentric with an inner wall. The improvements in efficiency shall become apparent from the discussion which follows

The state of the art of present day rocket engine manufacture focuses upon two methods for the preparation of thrust chambers. The first of these two methods deals with configurations which may be referred to as the channel type, and is exemplified by US Patents 3,595,025, and 3.897,316, previously discussed. The second method deals with the preparation of tube type thrust chambers, as exemplified by US Patents 3,208,132, 3,501,916, and 3,690,103, previously discussed. It is known that thrust chambers of the channel type of construction are capable of higher pressure operation, and thus higher thrust, but they suffer from lower heat exchange capability, and cost considerably more than the tube type thrust chambers. Conversely, the tube type chambers are limited in power capability, but more economical to manufacture than the channel type chambers. The present invention is related to a tube type thrust chamber of greater thrust capacity, and is directed to a method for the more economics manufacture thereof, and to a method whereby defects may readily be repaired and corrected without scrapping the entire tube bundle.

At present, tubular thrust chambers are formed by joining a large number of very precisely formed and aligned individual metal tubes, of such a material as 347 Stainless Steel, to form a substantially circular chamber of compound curvature. Each such tube is soldered, welded, or brazed to the adjacent tubes, to form a solid containment vessel, and then an outer jacket is attached to the exterior surface of the tube bundle. The brazing of these tubes together requires a very precise positioning of the tubes relative to each other, since the gap between them must be very closely controlled and very uniform, conventionally with a maximum tolerable gap of 0.203 mm (0.008 inches) for successful brazing. The application of the jacket comprises preparation of carefully shaped and sized metal sheets, which are brazed or welded in place on the tube bundle during or subsequent to the brazing of the tubes.

The present invention contemplates joining tubes of various materials, such as copper alloys, stainless steel, or nickel alloys, without causing unacceptable damage to or modification of the properties of the tubes, by a method other than by brazing. The process disclosed is capable of depositing an alloy layer between the tubes of a bundle by laser powder injection, so as to fill the space between the tubes prior to subsequent application of a structural jacket by laser powder injection, plasma spray, or welding techniques. It is thus also considered within the scope of the present invention to continue the application of filler material by laser powder injection, beyond the simple filling and bonding of the gap between the tubes, to cover the tubes with a selected alloy or group of alloys to form the structural jacket in-situ.

As indicated, the tubes which may be joined may be of any composition suitable for use in tube type thrust chambers. Suitable nickel based superalloys would include such alloys as INCONEL® 718 (Ni - 19 Cr - 0.05 C - 18.0 Fe - 0.9 Ti - 0.6 Al - 3.0 Mo - 5.2 Cb/Ta), INCONEL® 625 (Ni - 21.5 Cr - 9.0 Mo - 3.65 Cb/Ta), and HAYNES® A242 (Ni- 25 Al - 8 Cr). Suitable stainless steels would include those designated as 347 (Fe - 18 Cr - 10.5 Ni), 304 (Fe - 19 Cr - 9.5 Ni), and 316 (Fe - 13 Ni - 18 Cr - 2.25 Mo). Suitable copper alloys, the metals of choice because of their high conductivity, would include NARLOY Z (vacuum processed Cu - 3 Ag - 0.5 Zr), NASA Z (argon processed Cu - 3 Ag - 0.5 Zr), or GLIDCOP® (OFHC Cu plus 1.5 percent finely divided dispersed Al₂O₃), and the like. GLIDCOP®, while expensive, has superior high temperature strength characteristics, and is very suitable for use in the present invention. Since the joining method of the present invention is less demanding than the being techniques presently available, it is possible to lay up or jig the tube bundle with less stringent tolerances and less demanding alignment. For example, it is possible to bridge a gap of up to about 0.762 mm (0.030 inches) using laser powder injection, as opposed to a limitation of less than 0.203 mm (0.008 inches) for brazing. Since the laser powder injection method of bonding the tubes together permits filling of greater gaps between the surfaces to be joined, this permits much greater leeway in assembly of the tube bundle, leading to substantial time and cost advantages.

The metal used for bonding the tubes together may be either a conventional braze material such as would be suitable for brazing the substrate material, the substrate material itself, or a compatible alloy thereof. Thus, the filler material may be any of the materials listed above for the tubes themselves, a braze material such as gold-germanium, a diffusion bonding material such as copper, or other braze or diffusion bonding materials known to those skilled in the art. The laser powder injection bonding of the tubes is most conveniently conducted on the outside surface of the tube bundle, i.e. the exterior of the thrust chamber. After the spaces between the individual tube segments have been filled by laser powder injection of the filler material, the laser powder injection may be continued to cover the tube surfaces, if so desired, to form a smooth outer surface.

The thus joined tube bundle may then be surrounded by the structural jacket alloy, preferably a high strength, hydrogen resistant alloy having a low coefficient of expansion. Suitable materials for the structural jacket include such material as 347 Stainless Steel, INCONEL® 718, INCONEL® 625, or a copper alloy such as GLIDCOP®. The structural jacket may be applied by welding or brazing sheets of the appropriately configured material in place, or alternatively, by electroplating the nickel alloys in a conventional electroplating bath. However, since electroplating a sufficient thickness, e.g. 7.62 to 12.7 mm (0.30 to 0.50 inches), of a nickel alloy, requires up to six months of plating, this method is less desirable. A more efficient method for formation of the structural jacket over the laser powder injection bonded tube bundles prepared in accordance with the present invention is to plasma spray, or flame spray, an appropriate alloy in place. Such an alloy may include 347 Stainless Steel, INCONEL® 718, INCONEL® 625, GLIDCOP®, or other appropriate alloys, chosen so as to be compatible with the subsurface tubes and the filler material deposited to bond the tubes into a unitary bundle. Still further, the structural jacket may be formed by laser powder injection of the alloy material, rather than by plasma spray. This is particularly of value to avoid over-heating or stressing of the substrate tube materials or the filler material by high temperatures, since the laser powder injection method does not result in high temperatures at the point of deposition.

An additional advantage of the laser powder injection method used in the present invention is the capability of easily repairing a bonded tube assembly after completion of the bonding operation and inspection of the thrust chamber. If any imperfectly bonded gaps between the tubes are detected, the gap may readily be subjected to a laser powder injection of filler material so as to repair the defect. Frequently, if a brazing defect is found after bonding the tubes with a braze material, the entire tube bundle is scrapped, since subjecting the assembly to a second braze cycle frequently results in wicking of the braze material away from the groove between adjacent tubes, and loss of continuity of the bonding. However, since laser powder injection does nor result in severe heating of the substrate, this technique may be used for repair of defectively brazed tubes. Note that the use of laser powder injection for repairing a bonded tube assembly fabricated by brazing does not fall within the scope of the claims. Indeed, the laser powder injection method permits repair of bonding defects even after the structural jacket has been applied over the exterior surface of the thrust chamber, since laser powder injection repairs may be made to the interior of the tube assembly to fill minor gaps in the bonds between the individual tubes, which gaps may be formed during the application of the structural jacket.

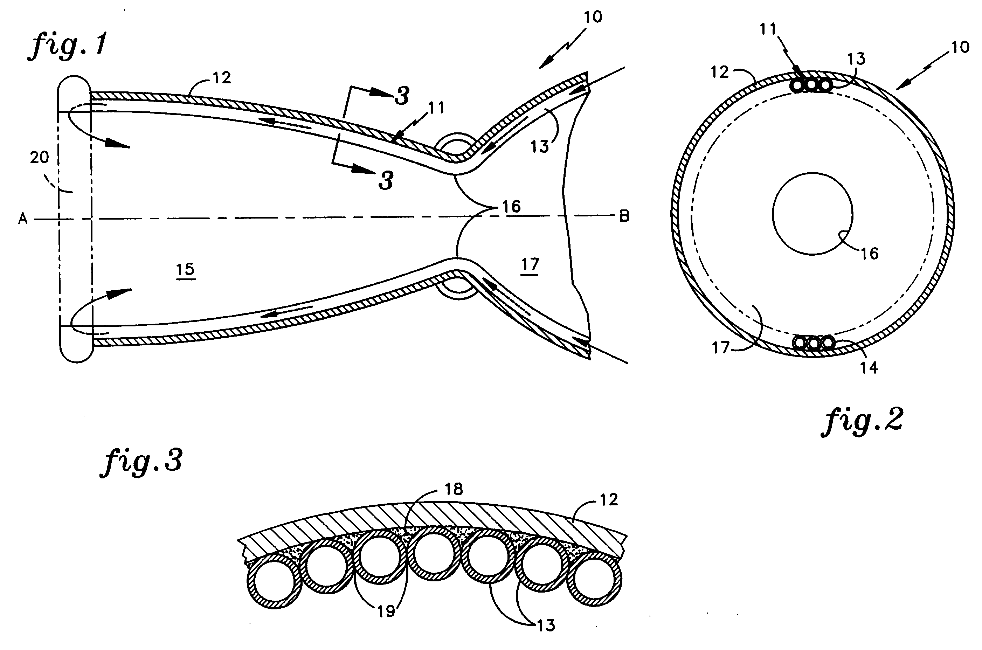

In Figure 1 is shown a rocket engine thrust chamber 10, having longitudinal axis A - B, a head or injector 20, composite wall assembly 11, combustion chamber 15, throat 16, and nozzle 17. The composite wall assembly 11 comprises the structural jacket, 12, and a plurality of cooling pasages, composed of a group or bundle of formed and shaped individual longitudinal tubes, 13 and 14, placed side by side to form a substantially circular chamber of compound curvature, running axially from a liquid coolant manifold, not shown, at the end of nozzle 17, to the head or injector, 20. The tubes are joined to the outer structural jacket, 12, of metal, formed as previously indicated, which acts both to seal the thrust chamber and prevent leakage of gases therefrom, and to resist the pressure generated therein by the combustion of rocket fuels. The tubes, 13 and 14, serve as the wall of the thrust chamber, and constitute a series of longitudinal coolant pasages throughout the length of the chamber. These tubes are made of easily formed material of high heat conductivity, such as copper, and are formed to shape by the use of common forming dies with concurrent application of internal pressure to prevent collapse of the tube. After forming, the tubes have a longitudinally curved shape substantially as shown in Figure 1. The thrust chamber wall, 11, is cooled by the flow of liquid propellant through the coolant tubes, 13 and 14, in the direction indicated in Figure 1 by the arrows, i.e. from the nozzle end of the chamber toward the injector.

Figure 2 illustrates an end elevation of the thrust chamber, 10, of Figure 1, in cross section, showing the wall assembly 11, having structural jacket 12, and cooling tubes 13 and 14. Also shown are the thrust chamber throat, 16, and the nozzle 17.

Figure 3, a cross-section taken along line 3 - 3 of Figure 1, shows, in simplified schematic form, a plurality of thin wall metal coolant tubes, 13, adjacent to and aligned with each other, which are joined to each other and to the internal surface of the structural jacket 12. The tubes are joined to each other by laser powder injection of filler material, 18, at the joints 19 between the tubes. The tubes are bonded to the structural jacket as set forth herein. As an alternative, the structural jacket may comprise an in-situ formed layer of coating material, rather than the pre-formed and assembled structure illustrated.

In accordance with preferred embodiments of the present invention, filler powder is injected into the path of a pulsed (or continuous) YAG laser, or a CO₂ laser, focused at a point above the surfaces being joined or coated so as to avoid melting or overheating of the surfaces themselves, and the powder is heated to a plastic state and deposited upon the substrate, such as the joint between adjacent coolant tubes. This produces a highly dense and uniform layer of the filler material, which is selected for compatibility with the tube composition, and preferably exhibits a low coefficient of expansion. This process may be automated and scaled to meet manufacturing requirements. In addition to application of the filler material to the joint or gap between the tubes, such material may be laser powder injected as a coating over the tube bundle, so as to form the structural jacket in-situ.

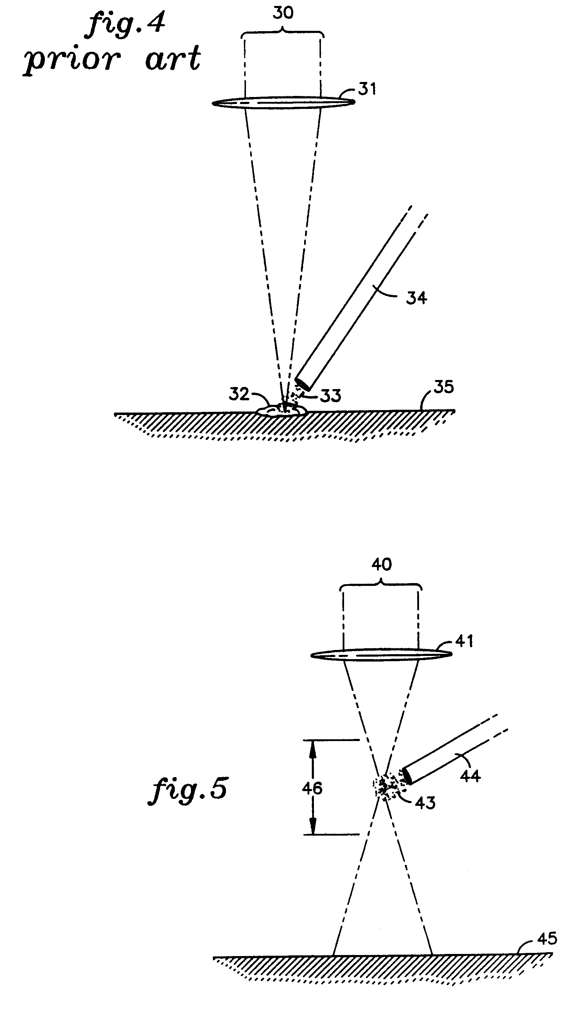

In a conventional laser spray powder application, or laser cladding operation, for which a focusing arrangement is illustrated schematically in Figure 4, a high intensity laser beam, 30, is focused by a final focal lens, 31, on substrate 35, to melt a small volume of surface metal, forming melt pool 32. The powdered metal alloying material, 33, which is injected by the powder injector, 34, melts in this pool, and is dispersed therein, altering the composition of the surface layer in the desired manner. Relative movement of the laser beam and the workpiece causes the molten material to rapidly chill, which can result in hardening due to phase changes in the solid metal. In conventional laser cladding apparatus and procedures of this nature, the laser beam and the powder exit the laser spray nozzle essentially coaxially, and have the same focal point, upon the surface of the substrate being coated.

However, in a preferred embodiment of the present invention, the focal point is not on the surface of the article as it is in conventional practice, but at a point slightly above the surface of the tubes to be joined. As shown in Figure 5, the laser beam 40 is focused by a final focusing lens, 41, at a point above the tubes, e.g. substrate 45, thus forming a defocused hot zone 46, into which the powder 43 is injected via powder injection means 44. In this manner, with appropriate control of laser beam intensity and focus, in conjunction with choice of powder size and flow rate, we have been able to heat the powder particles sufficiently that they are plastically deformed at the point of impact upon the substrate, but not to the point at which the microstructure of the filler or coating material, or the substrate, is altered. That is, the primary matrix alloy microstructure is unchanged by the rapid laser heating of the powder, followed by the sudden quenching resulting from deposition on a relatively cool substrate, which acts as a heat sink. Further, a rapid build-up of material is possible, so as to fill in the joint or gap between the tubes rapidly and uniformly.

The actual physical state of the powder at its highest temperature is not fully understood, but it is believed that the powder is fully melted, and resolidified at such a rapid rate such that insufficient migration or coalescence of the oxide particulates occurs to affect the microstructure of the material. Alternatively, it is considered possible that the surfaces of individual powder grains are subjected to melting while the core, or central portions of the powder grains remain in a semi-solid, or solid state, such that boundaries between the individual powder grains coalesce. In either event, there are no longer any boundaries between the individual powder grains as deposited. For purposes of this application, this process shall be referred to as non-equilibrium melting.

The capability to achieve this result is dependent upon a large number of factors, chief among which are the laser intensity, the powder composition and size distribution, the powder flow rate, the distance of the focal point above the substrate, and relative motion of the laser and the workpiece. While the present invention permits the deposition of filler metals on any substrate to which the metal will bond, it is noted that the bonding is not a diffusion bond, or a complete metallurgical bond, since the surface layer of the substrate is not subjected to melting, either substantially or completely. The deposits which are obtained, however, are very uniform, of high density (approaching 100 percent of theoretical). Moreover, multiple coating layers may be applied very rapidly to achieve any desired thickness of the deposit, since no heat treatment of the substrate, or of the deposit, is necessary to smooth, anneal, or densify the resultant filler metal. Further, it is envisioned that one is able to alter the composition of individually applied layers of metal, permitting the establishment of gradients or variations of composition from the tube surface to the outer surface. This variant lends itself to the in-situ fabrication of the structural jacket, by permitting one to apply one specific filler material to bond the tubes together, and then to modify the coating material so as to provide a structural jacket of different composition and properties.

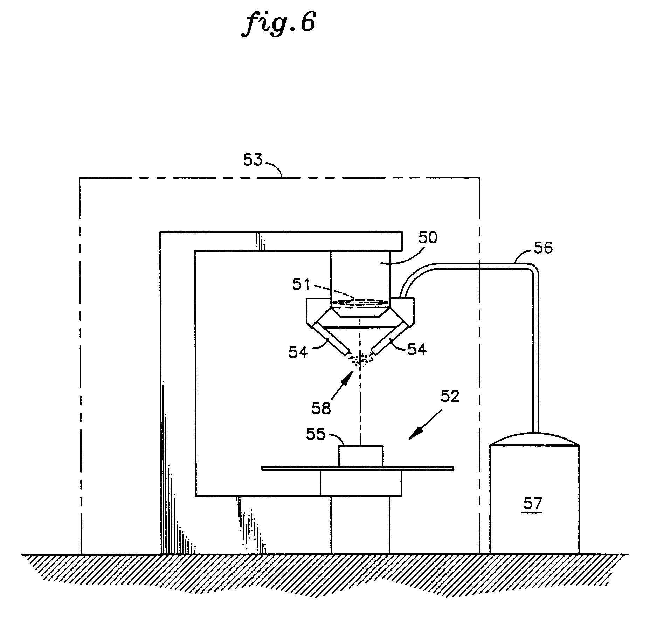

An apparatus suitable for the present invention is schematically presented in Figure 6, wherein target 55 is positioned on robotic work station 52, within an optional laser safety enclosure 53. Laser source 50, including focusing lens 51, is positioned away from the target at a desired distance, in proximity to powder injectors 54, which are in turn fed by line 56 from powder source 57. The equipment is situated in such a manner that the filler metal powder from the powder source 57 is injected into a defocused hot zone of the laser beam, 58, at a preselected distance from the target. The powder, which may be from about minus 100 to about plus 325 mesh (45 to 150 microns) in size, is preferably from about minus 100 to plus 200 mesh (75 to 150 microns) and is preferably carried at high speed in an inert gas stream, such as argon, is heated and virtually simultaneously deposited on the target, the joint between adjacent tubes, which is in motion relative to the laser source. The work station is preferably robotic, with from three to six degrees of freedom, and may be powered hydraulically, electrically, pneumatically, or by some combination of the same. The robotic work station may be computer controlled in conventional manner. It is noted that the work piece may, alternatively, remain stationary, while the laser and powder injection nozzles move relative to the target. The laser may, for example, be a pulsed YAG laser, although continuous lasers are also useful in the present invention, providing that the laser is metallurgically compatible with the alloy to be deposited. Various types of laser may be used, provided they have focusing capability, and may be used in conjunction with a typical powder spray nozzle. It is critical that the laser be focused in such a manner that it does not focus directly upon the substrate, since melting of the surface is specifically to be avoided. A secondary laser or other means may be utilized for alignment pulses. The laser work parameters are computer controlled, and are linked to the robotic work station so as to achieve an optimized high reliability deposition.

The spray nozzle is selected so as to provide a continuous flow of particles of the metal powder to a defocused hot zone, at a point slightly distant from the substrate being coated, as illustrated in Figure 5. The injected powder is heated by the laser, to a temperature at which the powder is in a plastic state, or to a state of non-equilibrium melting. The coating material, in the form of finely divided powder in a plastic state, carried in a rapidly moving stream of inert gas, then impacts upon the relatively cold surfaces of the target joint between the tubes, and is distributed thereupon. The rapid quenching affect (estimated to be at least 5.56 x 10³°C per second (10⁴°F per second)) of impact upon the surface insures rapid cooling of the filler material, such that the filler is not metallurgically altered. Since the powder is subjected to non-equilibrium melting, and the substrate is not heated by the laser to the extent that melting of the surface layer occurs, the deposited layer does not alloy with the substrate, but coats the surface thereof. The focal point of the laser may be from about 2.54 mm (0.10 inches) to about 25.4 mm (1.0 inches) above the surface of the work piece. The flow rate of powder may be controlled by control of the carrier gas, such as argon, to deposit the powder at a rate of from about 8 grams/minute to about 20 grams per minute. It is to be noted, that while the above discussion refers to the use of filler metal alloy powder, the use of wire feed to the laser injector is of course within the scope of the present invention. It is also noted that various laser types may be utilized, such as a YAG laser in the power range from about 25 to 400 watts, or a CO₂ laser of from about 25 to 6,000 watts. The laser may be operated in either the continuous or the pulsed mode.

### EXAMPLE:

Copper tubes of a size conventionally used in the preparation of tube type thrust chambers were formed in the configuration of a rocket thrust chamber, as illustrated in Figure 1. The tubes were placed in tight proximity to one another, encircling a "Mae West" form. A YAG laser was set up for deposition of 347 stainless steel from a wire source, and used to deposit a bonding layer of the stainless steel between adjacent tubes. A strong bond was formed between the tubes, with a minimal amount of heat affected zone developed outside the actual coating area, and no defective bonding or unfilled gap between the tubes. The bond was at least the equivalent of the bonding observed using conventional brazing techniques, and was considerably more convenient and cost effective to achieve.

It is to be understood that the above description of the present invention is subject to considerable modification, change, and adaptation by those skilled in the art, and that such modifications, changes, and adaptations are to be considered to be within the scope of the present invention as defined by the appended claims.

## Claims

1. A method for fabricating a rocket thrust chamber (10) having a combustion chamber (15), a throat section (16), and a nozzle section (17), said method comprising the steps of: forming a plurality of elongated hollow tubes (13,14) having a configuration conforming to the shape of a rocket thrust chamber; forming an elongated hollow member by circumferentially placing said hollow tubes in parallel side-by-side relationship and in equally spaced encircling relationship to a common longitudinal axis (A-B); applying a filler material (18) to the areas between said tubes in side-by-side relationship so as to completely fill the areas between said tubes and to bond said tubes to each other; characterised in that said filler material (18) is applied by laser injection welding.

2. The method of claim 1, wherein said tubes (13,14) are of a material selected from the group consisting of copper alloys, nickel alloys and stainless steel alloys.

3. The method of claim 1 or 2, wherein said filler material (18) is selected from the group consisting of copper alloys, nickel alloys, stainless steel alloys, brazing materials and diffusion bonding materials.

4. The method of claim 3, wherein said filler material (18) is the same material as the composition of the tubes (13,14).

5. The method of any preceding claim wherein a structural jacket (12) is applied to the exterior of said elongated hollow member.

6. The method of claim 5 wherein said jacket (12) is applied by laser injection coating.

7. The method of any preceding claim in which said filler material (18) is a dispersion strengthened material.

8. The method of any preceding claim in which said laser injection welding includes the steps of:
a) focusing a laser beam on a point which is from about 2.54 to 25.4 mm above the surface (45) to which said filler material (18;43) is to be applied
b) injecting said filler material into said laser beam near the focal point.

9. The method of claim 6 wherein the composition of the jacket varies through the thickness of the jacket.

## Patentansprüche

1. Verfahren zum Herstellen einer Raketenschubkammer (10) mit einer Brennkammer (15), einem Halsabschnitt (16) und einem Düsenabschnitt (17), wobei das Verfahren die folgenden Schritte aufweist: Formen einer Mehrzahl von länglichen hohlen Rohren (13, 14) mit einer Gestalt, die der Form einer Raketenschubkammer entspricht; Erzeugen eines länglichen hohlen Elements durch umfangsmäßig Plazieren der hohlen Rohre in einer parallelen Relation Seite an Seite und in einer gleich beabstandeten, einkreisenden Relation zu einer gemeinsamen Längsachse (A-B); Aufbringen eines Füllmaterials (18) auf die Bereiche zwischen den Rohren in Relation Seite an Seite, um die Bereiche zwischen den Rohren vollständig zu fällen und die Rohre miteinander zu verbinden, dadurch gekennzeichnet, daß das Füllmaterial (18) durch Laserinjektionsschweißen aufgebracht wird.

2. Verfahren nach Anspruch 1, wobei die Rohre (13, 14) aus einem Material bestehen, das aus der Gruppe ausgewählt ist, die aus Kupferlegierungen, Nickellegierungen und Legierungen aus rostfreiem Stahl besteht.

3. Verfahren nach Anspruch 1 oder 2, wobei das Füllmaterial (18) aus der Gruppe ausgewählt ist, die aus Kupferlegierungen, Nickellegierungen, Legierungen aus rostfreiem Stahl, Hartlötmaterialien und Diffusionsverbindungsmaterialien besteht.

4. Verfahren nach Anspruch 3, wobei es sich bei dem Füllmaterial (18) um das gleiche Material handelt wie die Zusammensetzung der Rohre (13, 14).

5. Verfahren nach einem der vorangehenden Ansprüche, wobei auf das Äußere des länglichen hohlen Elements eine strukturelle Umhüllung (12) aufgebracht wird.

6. Verfahren nach Anspruch 5, wobei die Umhüllung (12) durch Laserinjektionsbeschichten aufgebracht wird.

7. Verfahren nach einem der vorangehenden Ansprüche, bei dem das Füllmaterial (18) ein dispersionsverfestigtes Material ist.

8. Verfahren nach einem der vorangehenden Ansprüche, wobei das Laserinjektionsschweißen die folgenden Schritte aufweist:
a) Fokusieren eines Laserstrahls auf einen Punkt, der sich von etwa 2,54 bis 25,4 mm oberhalb der Oberfläche (45), auf die das Füllmaterial (18, 43) aufgebracht werden soll, befindet;
b) Einbringen des Füllmaterial in den Laserstrahl nahe dem Brennpunkt.

9. Verfahren nach Anspruch 6, wobei sich die Zusammensetzung der Ummantelung über die Dicke der Ummantelung ändert.

## Revendications

1. Procédé de fabrication d'une chambre de poussée de fusée (10) comprenant une chambre de combustion (15), une partie de col (16), et une partie de tuyère (17), ledit procédé comprenant les étapes suivantes : la formation d'une pluralité de tubes creux allongés (13, 14) avec une conformation de chambre de poussée de fusée ; la formation d'un élément creux allongé en plaçant circonférenciellement lesdits tubes creux, parallèlement les uns à côté des autres et de façon régulièrement espacée, dans une relation circonférentielle par rapport à un axe longitudinal commun (A - B) ; l'application d'une matière de remplissage (18) dans les zones comprises entre lesdits tubes disposés les uns à côté des autres, de façon à remplir complètement les zones entre lesdits tubes et à lier lesdits tubes les uns aux autres ; caractérisé en ce que ladite matière de remplissage (18) est appliquée par un soudage au laser par injection.

2. Procédé selon la revendication 1, dans lequel lesdits tubes (13, 14) sont réalisés en une matière choisie dans le groupe constitué par les alliages de cuivre, les alliages de nickel et les alliages d'acier inoxydable.

3. Procédé selon la revendication 1 ou 2, dans lequel ladite matière de remplissage (18) est choisie dans le groupe constitué par les alliages de cuivre, les alliages de nickel, les alliages d'acier inoxydable, les matières de brasage et les matières de liaison par diffusion.

4. Procédé selon la revendication 3, dans lequel ladite matière de remplissage (18) est la même matière que la composition des tubes (13, 14).

5. Procédé selon l'une quelconque des revendications précédentes, dans lequel une enveloppe structurelle (12) est appliquée à l'extérieur dudit élément creux allongé.

6. Procédé selon la revendication 5, dans lequel ladite enveloppe (12) est appliquée par revêtement par injection par laser.

7. Procédé selon l'une quelconque des revendications précédentes, dans lequel ladite matière de remplissage (18) est une matière renforcée à dispersion.

8. Procédé selon l'une quelconque des revendications précédentes, dans lequel ledit soudage au laser par injection comprend les étapes suivantes :
a) la concentration d'un faisceau laser sur un point qui est à environ 2,54 à 25,4 mm au-dessus de la surface (45) sur laquelle ladite matière de remplissage (18 ; 43) doit être appliquée ;
b) l'injection de ladite matière de remplissage dans ledit faisceau laser près du point focal.

9. Procédé selon la revendication 6, dans lequel la composition de l'enveloppe varie tout au long de l'épaisseur de l'enveloppe.
